(19) Europäisches Patentamt / European Patent Office / Office européen des brevets

(11) **EP 2 310 836 B1**

(12) **FASCICULE DE BREVET EUROPEEN**

(45) Date de publication et mention
de la délivrance du brevet:
**09.05.2012 Bulletin 2012/19**

(51) Int Cl.:
*G01B 9/02* (2006.01)   *G01B 11/06* (2006.01)
*G01N 21/45* (2006.01)

(21) Numéro de dépôt: **09781414.9**

(22) Date de dépôt: **03.08.2009**

(86) Numéro de dépôt international:
**PCT/EP2009/060021**

(87) Numéro de publication internationale:
**WO 2010/015594 (11.02.2010 Gazette 2010/06)**

(54) **PROCEDE DE MESURE SANS CONTACT DE LA MASSE VOLUMIQUE D'UN MATERIAU POREUX, UTILISANT UNE MESURE DE L'INDICE DE REFRACTION DU MATERIAU PAR TOMOGRAPHIE PAR COHERENCE OPTIQUE**

KONTAKTLOSES VERFAHREN ZUR MESSUNG DER DICHTE EINES PORÖSEN MATERIALS UNTER VERWENDUNG EINER MITTELS OPTISCHER KOHÄRENZTOMOGRAPHIE ERHALTENEN MESSUNG DES BRECHUNGSINDEX DES MATERIALS

CONTACTLESS METHOD OF MEASURING THE DENSITY OF A POROUS MATERIAL, USING A MEASUREMENT OF THE REFRACTIVE INDEX OF THE MATERIAL OBTAINED BY OPTICAL COHERENCE TOMOGRAPHY

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **05.08.2008 FR 0855426**

(43) Date de publication de la demande:
**20.04.2011 Bulletin 2011/16**

(73) Titulaire: **COMMISSARIAT A L'ENERGIE ATOMIQUE ET AUX ENERGIES ALTERNATIVES 75015 Paris (FR)**

(72) Inventeurs:
• **JEANNOT, Laurent**
  **F-21120 Is sur Tille (FR)**
• **SANDRAS, Florent**
  **F-21000 Dijon (FR)**

(74) Mandataire: **Ilgart, Jean-Christophe et al BREVALEX 95 rue d'Amsterdam 75378 Paris Cedex 8 (FR)**

(56) Documents cités:
**WO-A-2006/030149**

• **VEILLEUX J ET AL: "Optical coherence tomography for the inspection of plasma-sprayed ceramic coatings" JOURNAL OF THERMAL SPRAY TECHNOLOGY SEPTEMBER 2007 SPRINGER NEW YORK LLC US, vol. 16, no. 3, septembre 2007 (2007-09), pages 435-443, XP002519244**
• **ALMEIDA R M: "SOL-GEL SILICA FILMS ON SILICON SUBSTRATES" INTERNATIONAL JOURNAL OF OPTOELECTRONICS (INCL.OPTICAL COMPUTING& PROCESSING), TAYLOR & FRANCIS, LONDON, GB, vol. 9, no. 2, 1 mars 1994 (1994-03-01), pages 135-142, XP000486853 ISSN: 0952-5432 cité dans la demande**
• **SORIN W V ET AL: "SIMULTANEOUS THICKNESS AND GROUP INDEX MEASUREMENT USING OPTICAL LOW-COHERENCE REFLECTOMETRY" IEEE PHOTONICS TECHNOLOGY LETTERS, IEEE SERVICE CENTER, PISCATAWAY, NJ, US, vol. 4, no. 1, 1 janvier 1992 (1992-01-01) , pages 105-107, XP000244587 ISSN: 1041-1135**
• **E.R. KORESHEVA ET AL.: "Creation of a diagnostic complex for the characterization of cryogenic laser-fusion targets using the tomography method with probing irradiation in the visible spectrum" JOURNAL OF RUSSIAN LASER RESEARCH, vol. 28, no. 2, mars 2007 (2007-03), XP002519246**

EP 2 310 836 B1

• CHOUX A ET AL: "Spatial reconstruction algorithm of DT layer in cryogenic targets using optical techniques" FUSION SCIENCE AND TECHNOLOGY AMERICAN NUCLEAR SOCIETY USA, vol. 51, no. 4, mai 2007 (2007-05), pages 727-736, XP008103721 ISSN: 1536-1055

• VEILLEUX J ET AL: "Particle size measurement in glass powder beds using optical coherence tomography" OPTICAL ENGINEERING SOCIETY OF PHOTO-OPTICAL INSTRUMENTATION ENGINEERS USA, vol. 47, no. 3, mars 2008 (2008-03), pages 1-9, XP002519245 ISSN: 0091-3286

**Description**

## DOMAINE TECHNIQUE

La présente invention concerne un procédé de mesure sans contact de la masse volumique (en anglais, *density*) d'un matériau poreux

Ce procédé utilise la mesure sans contact de l'indice de réfraction du matériau.

Précisons dès maintenant que la mesure de l'indice de réfraction du matériau est effectuée par l'intermédiaire d'une mesure de l'épaisseur d'une couche transparente ou semi-transparente (c'est-à-dire translucide), dans une gamme d'épaisseurs allant de quelques micromètres à plusieurs millimètres, et d'une mesure du chemin optique (en anglais, *optical path*) associé.

L'originalité du procédé repose sur la combinaison de l'acquisition de signaux obtenus par tomographie par cohérence optique (en anglais, *optical coherence tomography*), ou OCT, qui est une technique de haute résolution, et de mesures d'épaisseurs . Cette combinaison permet de mesurer avec précision l'indice de réfraction d'un matériau et d'en déduire la masse volumique (en anglais, *density*) locale, dans le cas de matériaux poreux ou de matériaux alvéolaires ou mousses (en anglais, *foams*).

Ainsi, l'invention permet une mesure sans contact et non destructive de la masse volumique d'un matériau poreux. On combine pour ce faire des mesures par tomographie par cohérence optique et des mesures d'épaisseur, ce qui permet dans un premier temps de mesurer avec précision l'indice de réfraction effectif du matériau poreux pour finalement estimer la masse volumique du matériau.

## ÉTAT DE LA TECHNIQUE ANTÉRIEURE

La technique de tomographie par cohérence optique (OCT) a fait l'objet de nombreuses publications scientifiques et son principe est utilisé dans le domaine médical (en particulier, en ophtalmologie et en dermatologie) pour l'imagerie des structures transverses des tissus biologiques.

Seules quelques techniques d'imagerie ont révolutionné la médecine diagnostique durant les dernières décennies : la tomographie calculée à rayonnement X (en anglais, *X-ray computed tomography*) ou scanographie, l'imagerie de résonance magnétique (IRM) et l'imagerie par radioisotope (en anglais, *radioisotope imaging*). Ces techniques permettent une visualisation tridimensionnelle ; cependant, leur résolution spatiale est typiquement limitée à quelques millimètres dans la pratique clinique standard.

Les techniques d'imagerie optique telles que la fluorescence ou la microscopie confocale autorisent des résolutions axiale et transverse de l'ordre du micromètre, mais avec une pénétration limitée dans les tissus biologiques.

Les examens par ultrasons (ou échographies) nécessitent, quant à eux, un contact physique avec l'objet à analyser et fournissent une résolution axiale supérieure à une centaine de micromètres.

Depuis une dizaine d'années, les avancées en optique, dans le domaine des fibres optiques comme dans celui des nouvelles technologies de sources de lumière, ont permis le développement d'une nouvelle technique d'imagerie médicale optique non-invasive et sans contact : la tomographie par cohérence optique. Les deux caractéristiques principales de cette technique sont d'une part le principe de l'interférométrie et d'autre part l'utilisation d'une source émettant une lumière de cohérence partielle.

En interférométrie classique, une source de lumière de forte cohérence, de longueur d'onde λ, est utilisée pour produire une interférence sur une grande échelle de distance. L'OCT est une forme d'interférométrie qui utilise une source de lumière de faible cohérence, auquel cas l'interférence n'apparaît seulement que sur de très faibles distances. Ainsi, la technique d'OCT permet d'avoir une résolution axiale micrométrique.

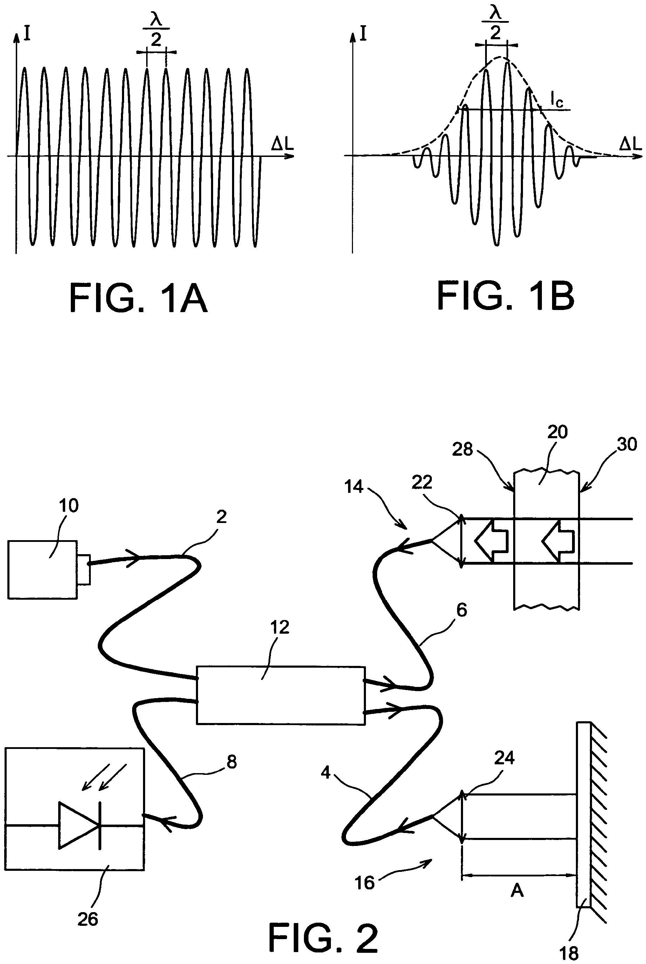

Tout ceci est schématisé sur les figures 1A et 1B où l'on a représenté les variations de l'intensité I du signal interférométrique en fonction du déplacement ΔL du miroir de référence utilisé pour obtenir l'interférence, dans ce cas où l'on utilise une source lumineuse fortement cohérente (voir la figure 1A) ou une source de cohérence partielle ou faible (voir la figure 1B où $l_c$ représente la longueur de cohérence).

Une autre technique, appelée « spectrométrie interférentielle en lumière blanche » ou « interférométrie spectrale en lumière blanche », permet la mesure de l'épaisseur d'une couche transparente dans une gamme d'épaisseurs allant de quelques micromètres à plusieurs centaines de micromètres. Elle s'applique aussi bien à des couches planes qu'à des couches de forme sphérique ou cylindrique ainsi qu'à des objets monocouches ou à des empilements multicouches transparents. La mesure se fait sans contact, avec une précision atteignant 100 nm.

Cependant, cette technique semble moins adaptée à l'étude des matériaux poreux et à celle des échantillons multicouches présentant de faibles sauts d'indice de réfraction.

L'article de Almeida: "Sol-gel silica films on silicon substrates", INTERNATIONAL JOURNAL OF OPTOELECTRONICS, vol. 9, no. 2, pages 135-142 (1994) divulgue la mesure de la pourcentage de porosité d'un matériau poreux (film de sol-gel) en fonction de son indice de réfraction. La mesure de l'indice de réfraction est faite à l'aide d'un ellipsomètre.

L'article de Sorin et al: "Simultaneous Thickness and Group Index Measurement Using Optical Low-Coherence Reflectometry", IEEE PHOTONICS TECHNOLOGY LETTERS, vol. 4, no. 1, janvier 1992, pages 105-107 divulgue la mesure d'un indice de groupe et de l'épaisseur d'un objet exclusivement par OCT.

Le brevet WO 2006/030149 divulgue la mesure de l'épaisseur d'un objet par ombroscopie optique à une seule vue et l'utilisation de la radiographie X pour effectuer une telle mesure.

L'article de Choux et al.: "Spatial reconstruction algorithm of DT layer in cryogenic targets using optical techniques", FUSION SCIENCE AND TECHNOLOGY, vol. 51, no. 4, mai 2007 , pages 727-736, décrit la mesure par OCT de l'épaisseur de couches d'un objet sphérique et creux, et la caractérisation par ombroscopie de la surface intérieure de l'objet.

## EXPOSÉ DE L'INVENTION

La présente invention a pour but de remédier aux inconvénients précédents.

Au regard des applications existantes, le procédé, objet de l'invention, présente les originalités suivantes :

- il concerne une gamme d'épaisseurs allant de moins de 10 $\mu$m à plusieurs millimètres,
- il permet de caractériser des objets non plans,
- il combine des mesures de chemins optiques à des mesures d'épaisseurs, pour estimer l'indice de réfraction effectif de matériaux poreux, et
- il permet le calcul de la masse volumique locale des mousses.

L'invention porte principalement sur un procédé permettant de mesurer, sans contact et de façon non destructive, l'indice de réfraction de dépôts ou d'objets creux et la masse volumique de ces derniers. Ce procédé utilise la technique de tomographie par cohérence optique, combinée à la mesure d'épaisseurs, ou à la mesure de diamètres externes par ombroscopie optique (en anglais, *backlit shadowgraphy*).

Le procédé présente les avantages suivants :

- la mesure effectuée par ce procédé peut être appliquée à un objet sphérique, sans utiliser une géométrie d'éclairement adaptée à la forme de l'objet analysé,
- la mesure s'applique à des objets monocouches ou multicouches,
- la mesure se fait sans contact et avec des distances de travail allant de quelques millimètres à plusieurs dizaines de centimètres, ces distances dépendant du collimateur que l'on peut utiliser pour la mise en oeuvre du procédé,
- la mesure peut être effectuée sur des objets dont les épaisseurs varient de quelques micromètres à plusieurs millimètres,
- le procédé permet de mesurer des chemins optiques avec une précision d'une centaine de nanomètres,
- le procédé permet de mesurer l'indice de réfraction d'un échantillon massif (en anglais, *bulk*) ou poreux, et
- le procédé permet de mesurer la masse volumique d'un objet poreux.

L'invention se caractérise principalement par l'utilisation de la technique de tomographie par cohérence optique, technique qui sera décrite par la suite. Cette dernière est combinée à une autre technique instrumentale pour pouvoir déterminer les épaisseurs, les indices de réfraction ainsi que les masses volumiques des matériaux sondés.

La tomographie par cohérence optique est une technique qui permet d'effectuer des mesures d'épaisseurs optiques dans la gamme de quelques micromètres à plusieurs centaines de millimètres selon la course du miroir de référence utilisé pour sa mise en oeuvre (voir plus haut).

Elle permet des mesures sans contact et s'applique à des objets transparents ou translucides. Elle peut être utilisée sur des objets non plans et sur des empilements multicouches. Les mesures peuvent être réalisées en utilisant de faibles puissances optiques (une centaine de $\mu$W) qui assurent le caractère non-destructif de la technique. De plus, la tomographie par cohérence optique permet d'obtenir des résolutions meilleures que 1 $\mu$m (jusqu'à 100 nm).

Le procédé de mesure par tomographie par cohérence optique peut être mis en oeuvre à des distances de plusieurs mètres en utilisant des collimateurs. Ce procédé de mesure à distance peut être utile pour faire des mesures à l'intérieur d'enceintes à vide de grandes tailles en faisant passer la lumière nécessaire à sa mise en oeuvre à travers des hublots transparents, ou des boîtes à gants.

De façon précise, la présente invention a pour objet un procédé de mesure sans contact de la masse volumique d'un matériau poreux, ce procédé étant défini comme dans la revendication 1.

De préférence, lorsque le matériau poreux est constitué d'un matériau massif contenant des alvéoles, on détermine la masse volumique $\rho_p$ du matériau poreux par la formule suivante :

$$\rho_p = \rho_m \frac{n_p - 1}{n_m - 1}$$

où $n_p$ représente l'indice de réfraction du matériau poreux et $\rho_m$ et $n_m$ représentent respectivement la masse volumique et l'indice de réfraction du matériau massif (non poreux).

De préférence, on détermine l'indice de réfraction du matériau massif par tomographie par cohérence optique et par une mesure d'épaisseur à partir d'un objet fait du matériau massif.

On peut déterminer l'épaisseur de l'objet par exemple par radiographie X (de préférence une microradiographie X) ou par ombroscopie optique.

Selon le procédé de l'invention, l'objet est sphérique et creux et a ainsi des diamètres interne et externe, on détermine le diamètre interne et le chemin optique, ou épaisseur optique (entre deux points diamétralement opposés sur la paroi externe de l'objet), par tomographie par cohérence optique, et l'on détermine le diamètre externe par ombroscopie optique. Le calcul de la moitié de la différence entre les diamètres externe et interne ainsi déterminés, permet d'obtenir l'épaisseur (géométrique) de l'objet.

Selon un mode de réalisation particulier de l'invention, l'objet est sphérique et creux et a ainsi des diamètres interne et externe, et l'on fixe l'objet à l'extrémité d'un fil capillaire en vue de déterminer le chemin optique et l'épaisseur de l'objet en un même point.

La présente invention utilise la technique de tomographie par cohérence optique et, grâce au pouvoir de pénétration autorisé par cette technique, permet une mesure de masse volumique, et donc de porosité, dans l'épaisseur du matériau poreux étudié. De plus, l'invention permet un calcul rigoureux de la masse volumique et non une simple estimation de cette dernière (on est capable de calculer une incertitude de mesure), en fournissant une loi de variation de la masse volumique en fonction de l'indice de réfraction (et réciproquement).

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- les figures 1A et 1B, déjà décrites, montrent les variations de l'intensité d'un signal interférométrique en fonction du déplacement $\Delta L$ d'un miroir de référence utilisé pour obtenir une interférence, dans le cas où l'on utilise une source lumineuse fortement cohérente (figure 1A) et une source lumineuse à cohérence partielle (figure 1B),
- la figure 2 est une vue schématique d'un système OCT qui est utilisable pour la mise en oeuvre de l'invention,
- la figure 3 montre la signature OCT d'un microballon en matière plastique,
- la figure 4A montre un microballon monocouche de faible épaisseur,
- la figure 4B montre un signal OCT du microballon de la figure 4A,
- la figure 5 montre un matériau polymère alvéolaire ou mousse,
- la figure 6 montre un microballon en mousse, monté sur un fil capillaire, et
- la figure 7 est une vue schématique d'un dispositif OCT pour la mesure de chemins optiques sans contact.

## EXPOSÉ DÉTAILLÉ DE MODES DE RÉALISATION PARTICULIERS

Revenons d'abord sur la mesure par tomographie par cohérence optique.

Largement répandue en médecine, en biologie et dans l'industrie, la tomographie par cohérence optique ou OCT que l'on utilise dans la présente invention, est fondée sur le principe des interféromètres de Michelson. La figure 2 est une vue schématique d'un système d'OCT utilisable pour la mise en oeuvre de l'invention. Ce système comporte un interféromètre de Michelson à fibres optiques. Les fibres optiques ont les références 2, 4, 6, 8 sur la figure. Le système comprend aussi une source lumineuse à cohérence partielle 10, constituée par une diode super-luminescente ou SLD dans l'exemple, dont l'émission est centrée dans le proche infrarouge avec une largeur spectrale à mi-hauteur (en anglais, *full width at half maximum*), ou FWHM, de quelques dizaines de nanomètres.

L'onde lumineuse émise par la source 10 est divisée grâce à un coupleur 12 entre le bras de mesure 14 et le bras de référence 16 du système.

Dans le bras de référence, qui constitue une ligne à retard optique, la lumière est réfléchie par un miroir 18 qui est monté sur un système de translation (non représenté) incluant un codeur optique incrémental pour contrôler précisément sa position. Le miroir se déplace sur une plage de quelques millimètres à plusieurs centaines de millimètres, correspondant à la profondeur sondée maximale de l'échantillon mesuré 20. La durée de l'acquisition est inférieure à une seconde pour les courses de l'ordre du millimètre.

Dans le bras de mesure 14, l'onde lumineuse est injectée dans la fibre optique 6 qui est une fibre monomode à faible dispersion.

Le bras de mesure 14 et le bras de référence 16 comportent respectivement des collimateurs 22 et 24. La distance du miroir 18 au collimateur 24 est notée A.

Les ondes lumineuses réfléchies par le miroir de référence 18 et par l'une des interfaces 28 et 30 de l'échantillon 20 sont recombinées sur le détecteur 26 du système, une photodiode dans l'exemple (qui est reliée à des moyens de traitement de signaux non représentés), et produisent un signal d'interférence quand les chemins optiques dans les deux bras de l'interféromètre sont égaux, à la longueur de cohérence $l_c$ près.

Cette longueur de cohérence $l_c$ est fixée par les caractéristiques de l'onde émise par la source 10. On peut écrire :

$$l_c = \frac{2.\ln 2}{\pi} . \frac{\lambda_c^2}{\Delta\lambda}$$

où $\lambda_c$ correspond à la longueur d'onde centrale de l'émission lumineuse et $\Delta\lambda$ à la largeur spectrale à mi-hauteur (en anglais, *full spectral width at half maximum*) FWHM.

A titre purement indicatif et nullement limitatif, on utilise un système dans lequel $\lambda_c$ vaut 1310 nm et $\Delta\lambda$ vaut 60 nm, de sorte que $l_c$ est égale à 12,6 $\mu$m.

Avec une telle longueur de cohérence de 12,6 $\mu$m on ne peut « voir » (et mesurer avec la technique OCT) des couches dont l'épaisseur optique (épaisseur géométrique x indice optique) est inférieure à 12,6 $\mu$m. Pour des matériaux dont l'indice optique est de l'ordre de 1,5, cette limite correspond à des épaisseurs (géométriques) de 8 $\mu$m. Néanmoins, il est possible de diminuer la longueur de cohérence $l_c$ jusqu'à une valeur de 5 $\mu$m avec les technologies actuelles de sources SLD à large bande d'émission ($\Delta\lambda$ plus grande), et même jusqu'à une valeur de l'ordre de 1 $\mu$m en utilisant une source laser solide femtoseconde en tant que source 10.

Le signal d'interférence I($\delta$L) du système OCT est proportionnel à :

$$1 + R + 2.\sqrt{R} . \exp\left( -4.\ln 2 . \frac{\delta L^2}{l_c^2} \right) \cos\left( \frac{4.\pi}{\lambda_c} . \delta L \right)$$

où $\delta L$ est la différence de chemin optique entre les deux bras de l'interféromètre et $R$ le coefficient de réflexion de l'interface de l'échantillon 20. Cela se traduit par un signal comportant un pic par interface rencontrée par la lumière. La position du maximum de ce pic correspond à la position de l'interface. L'écart entre deux pics consécutifs est relié à la distance optique parcourue par l'onde lumineuse entre les deux interfaces associées. Connaissant l'indice de réfraction du milieu compris entre ces deux interfaces, il est aisé de calculer l'épaisseur du milieu sondé.

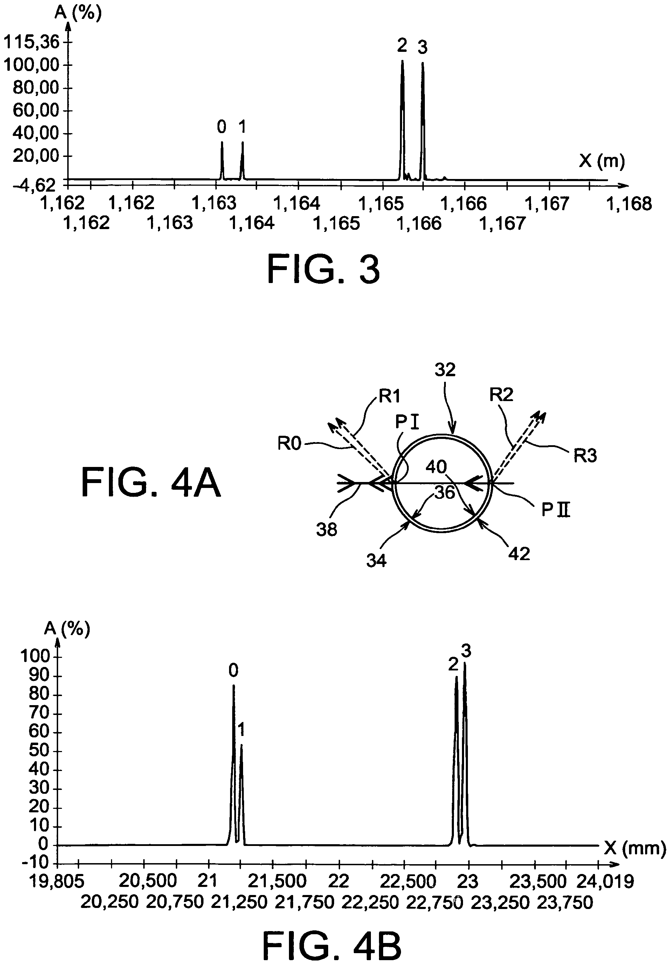

A titre d'exemple, la figure 3 montre la signature OCT (amplitude A en fonction de position X) d'un microballon en matière plastique dont le diamètre externe et l'épaisseur valent respectivement 2,23 mm et 166 $\mu$m. On voit quatre pics qui sont notés 0, 1, 2, 3 et correspondent aux quatre interfaces rencontrées par la lumière dans le cas de ce microballon.

La précision sur la mesure de la différence des chemins optiques, associée à la mesure précise de la position du miroir de référence, est inférieure à 300 nm (donnée du constructeur du système, liée à la technologie des tables utilisées et à la méthode de détection des pics).

Un signal OCT présente donc une succession de pics, chacun d'eux correspondant à la réflexion du faisceau lumineux sur une interface de l'échantillon mesuré. Chaque pic est précisément défini par sa position sur le trajet du faisceau. Il est donc possible de déduire le chemin optique correspondant à une différence de deux positions qui séparent deux interfaces de l'échantillon. Ce chemin optique est directement proportionnel à l'épaisseur de matériau comprise entre ces deux interfaces, multipliée par l'indice de réfraction du matériau pour la longueur d'onde centrale $\lambda_c$ de la source.

Par combinaison avec une méthode de mesure d'épaisseurs, les mesures OCT des différences de chemins optiques permettent l'estimation de l'indice de réfraction du matériau de l'échantillon mesuré, un microballon dans l'exemple de la figure 3.

A partir des valeurs d'épaisseurs moyennes, obtenues par exemple par microradiographie RX, et connaissant, par OCT, les chemins optiques correspondant à la traversée de ces épaisseurs, on est capable d'estimer l'indice de réfraction de chaque microballon étudié.

La formule reliant l'épaisseur Ep d'un matériau d'indice de réfraction n au chemin optique L correspondant à la traversée de ce matériau par la lumière est :

$$L = n \times Ep \quad \text{d'où} \qquad n = \frac{L}{Ep}$$

L'incertitude $\Delta n$ associée à la mesure de n s'écrit :

$$\Delta n = \frac{\Delta L.Ep + L.\Delta Ep}{Ep^2}$$

La mesure de l'indice de réfraction d'un matériau poreux, tel qu'un matériau alvéolaire ou une mousse, permet d'envisager de caractériser la masse volumique locale au point de mesure du matériau. En effet, pour un objet (tel qu'un microballon) très peu dense, l'indice de réfraction sera proche de 1, valeur de l'indice de réfraction de l'air. Connaissant de plus l'indice du matériau massif (en anglais, *bulk material*), il est possible d'estimer la proportion de matériau sondé sur un pôle du microballon, par rapport à la quantité d'air traversée, et donc de calculer la masse volumique du microballon au niveau de ce pôle.

Des caractérisations optique OCT et microradiographique RX ont été effectuées sur un microballon 32 (figure 4A) constitué par une monocouche de matière plastique (polymère CH). Ce microballon est synthétisé par dépôt plasma (GDP) ; son diamètre externe est de l'ordre de 2 mm et son épaisseur de l'ordre de quelques dizaines de micromètres.

La figure 4B montre le signal OCT correspondant à la moyenne de 20 acquisitions pour ce microballon, sur une profondeur de sondage de 40 mm. Le signal comporte quatre pics qui sont notés 0, 1, 2, 3. La paire de pics de gauche 0-1 correspond aux réflexions R0-R1 (figure 4A) sur les interfaces externe et interne 34-36 de la première paroi rencontrée par le faisceau lumineux de mesure 38, au niveau d'un premier pôle PI. La paire de pics de droite 2-3 correspond aux réflexions R2-R3 sur les interfaces interne et externe 40-42 de la deuxième paroi du microballon au niveau d'un second pôle PII.

Les résultats obtenus pour les mesures d'épaisseurs optiques au niveau des deux pôles et pour le diamètre interne du microballon sont donnés dans le tableau I.

Tableau I

|  | 1er pôle | Diamètre interne | 2nd pôle |
|---|---|---|---|
| Chemins optiques L ($\mu$m) | 61,9 | 1646,3 | 61,1 |

Le même microballon a été microradiographié par rayonnement X. Les paramètres d'exposition sous la colonne de microradiographie sont :

- temps d'exposition : 45 minutes,
- tube en chrome,
- tension : 15 kV,
- intensité : 20 mA.

La plaque radiographique développée est ensuite numérisée à l'aide d'un système optique de numérisation, comprenant un microscope Nikon de grandissement x20, équipé d'une caméra CCD de haute résolution. Avec les composants de ce système de numérisation, environ huit images sont nécessaires pour couvrir l'intégralité du pourtour d'un microballon.

Ensuite, à l'aide d'un logiciel approprié, un profil radial d'intensité est extrait de chaque image et permet de mesurer manuellement une épaisseur par positionnement de curseurs sur le profil. Une moyenne sur l'équateur (8 clichés et profils) fournit l'épaisseur du microballon.

On précise toutefois que l'épaisseur du microballon peut être mesurée par d'autres techniques que la radiographie X, par exemple par ombroscopie optique ou au moyen d'un palpeur mécanique.

Pour ce microballon, déjà caractérisé par OCT, l'épaisseur moyenne mesurée par rayonnement X vaut :

$$Ep = (39,8 \pm 0,9) \ \mu m$$

Ainsi, il est possible d'estimer l'indice de réfraction de la matière plastique constitutive du microballon. A 1310 nm cet indice vaut :

$$n = 1,55 \pm 0,04$$

L'incertitude de 0,04 sur l'indice de réfraction est essentiellement due à l'incertitude de la mesure d'épaisseur par rayonnement X (0,9 $\mu$m) et au fait que l'on a caractérisé une couche d'épaisseur assez faible.

Dans le procédé de l'invention, on calcule l'indice de réfraction des échantillons sphériques avec deux techniques optiques, en effectuant la combinaison de l'OCT avec une mesure du diamètre externe du microballon par ombroscopie optique à une seule vue (en anglais, *single-view backlit shadowgraphy*), plus simplement appelée « ombroscopie optique » (en anglais, « *backlit shadowgraphy* »). En effet la différence entre ce diamètre externe $\phi_{ext}$ (mesuré grâce à l'objectif télécentrique du système d'ombroscopie optique) et le diamètre interne $\phi_{int}$ obtenu grâce à l'OCT permet d'estimer l'épaisseur des parois de l'échantillon ; et, comme précédemment, le rapport entre le chemin optique L (également obtenu par OCT) et l'épaisseur Ep donne l'indice de réfraction n(=L/Ep) du matériau dont est composé le microballon.

Au sujet de l'ombroscopie optique, on se reportera notamment aux documents suivants :

[1] demande internationale WO 2004/083772 A publiée le 30 septembre 2004, « Procédé de mesure d'objets tridimensionnels par ombroscopie optique à une seule vue »

[2] demande internationale WO 2006/030149 A publiée le 23 mars 2006, « Procédé de mesure d'objets tridimensionnels par ombroscopie optique à une seule vue, utilisant les lois optiques de la propagation de la lumière »

[3] demande internationale WO 2008/023024 A publiée le 28 février 2008, « Procédé de mesure sans contact d'objets tridimensionnels à deux couches par ombroscopie optique à une seule vue ».

La combinaison de mesures optiques mentionnée plus haut paraît très puissante et plus confortable que la combinaison de l'OCT et de la radiographie X, notamment parce que le système d'ombroscopie optique est moins volumineux qu'un système de caractérisation par rayonnement X.

De même que l'on peut estimer l'indice de réfraction d'un microballon en matériau massif (en anglais, *bulk material*) (voir plus haut), de même, il est possible d'estimer l'indice de réfraction d'un matériau poreux : l'association des deux techniques de caractérisation peut également être appliquée à la mesure d'épaisseur de microballons faits d'un matériau polymère alvéolaire ou mousse. Les mesures permettent, de la même manière que précédemment, d'estimer l'indice de réfraction effectif pour un échantillon qui est composé d'alvéoles contenant un gaz et emprisonnées dans un polymère massif.

A partir de la valeur de l'indice de réfraction effectif et connaissant l'indice de réfraction du polymère massif et la masse volumique de celui-ci, on peut estimer la masse volumique locale de la mousse, c'est-à-dire sa masse volumique à l'endroit de la mesure.

Les microballons en mousse étudiés présentent un diamètre externe d'environ 2 mm, une épaisseur d'environ 100 $\mu$m, une masse volumique de 50 à 250 mg/cm$^3$ ainsi qu'une sphéricité et une concentricité supérieures à 99%.

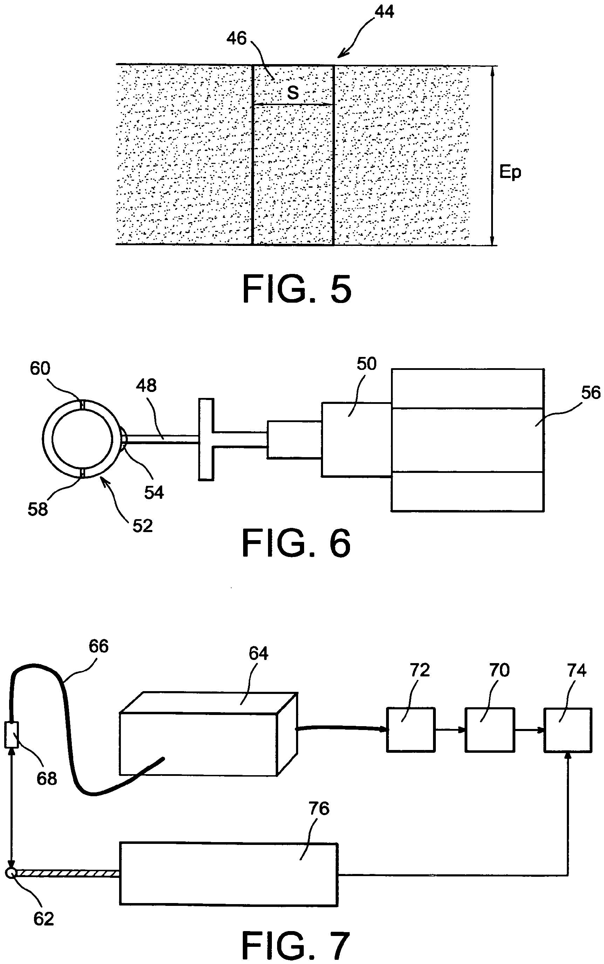

La figure 5 montre une couche 44, d'épaisseur Ep, d'un matériau alvéolaire polymère, ou mousse polymère, dont on connaît l'indice de réfraction effectif $n_M$. On connaît également les valeurs de l'indice de réfraction du polymère massif $n_{CHx}$ à la même longueur d'onde d'étude et la masse volumique de ce polymère massif $\rho_{CHx}$.

Dans une portion 46 de volume $V_T$ de la couche 44, la masse volumique $\rho_M$ du matériau est le rapport entre la masse totale $m_T$ de la portion et le volume $V_T$ occupé par cette portion :

$$\rho_M = \frac{m_T}{V_T}$$

Les masses respectives $m_{CHx}$ et $m_A$ des deux éléments composant le volume occupé par la mousse, à savoir le polymère massif et l'air contenu dans les alvéoles, vérifient la relation :

$$m_T = m_{CHx} + m_A$$

On peut aussi écrire :

$$m_T = \rho_{CHx}.V_{CHx} + \rho_A.V_A \quad \text{et} \quad V_T = V_{CHx} + V_A$$

où $\rho_{CHx}$ et $\rho_A$ respectivement les densités du polymère massif et de l'air, et $V_{CHx}$ et $V_A$ les volumes respectifs du polymère massif et de l'air dont la somme correspond à $V_T$.

Ainsi, la masse volumique de la mousse s'écrit :

$$\rho_M = \frac{\rho_{CHx}.V_{CHx} + \rho_A.V_A}{V_{CHx} + V_A}$$

Nous considérons ici que le volume de chaque matière sondée (CHx massif ou air) correspond au produit de la section S de la portion de mousse, sondée par le faisceau lumineux, par l'épaisseur associée de matière, notée $l_{CHx}$ pour le $CH_x$ massif et $l_A$ pour l'air. D'où :

$$V_{CHx} = S.l_{CHx} \quad \text{et} \quad V_A = S.l_A$$

$$\rho_M = \frac{\rho_{CHx} l_{CHx} + \rho_A.l_A}{l_{CHx} + l_A} = \frac{\rho_{CHx} l_{CHx} + \rho_A.l_A}{Ep} \qquad (1)$$

Nous allons maintenant exprimer chaque épaisseur $l_{CHx}$ et $l_A$ en fonction des indices de réfraction de la mousse $n_M$, du polymère massif $n_{CHx}$ et de l'air $n_A$.

Nous pouvons d'abord exprimer l'épaisseur totale Ep de la mousse en fonction des épaisseurs "partielles" $l_{CHx}$ et $l_A$ et en fonction du chemin optique total D et des chemins optiques "partiels" $d_{CHx}$ et $d_A$ :

$$Ep = l_{CHx} + l_A$$

et

$$Ep = \frac{D}{n_M} = \frac{d_{CHx} + d_A}{n_M} = \frac{1}{n_M}.(n_{CHx}.l_{CHx} + n_A l_A)$$

Ces deux dernières équations permettent d'exprimer les épaisseurs $l_{CHx}$ et $l_A$ en fonction des indices de réfraction :

$$l_{CHx} = \frac{n_M - n_A}{n_{CHx} - n_A}.Ep$$

$$l_A = \frac{n_{CHx} - n_M}{n_{CHx} - n_A}.Ep$$

En reportant ces valeurs dans l'équation (1), on obtient :

$$\rho_M = \frac{n_M - n_A}{n_{CHx} - n_A}.\rho_{CHx} + \frac{n_{CHx} - n_M}{n_{CHx} - n_A}.\rho_A$$

$$\rho_M = \frac{\rho_A . n_{CHx} - \rho_{CHx} . n_A}{n_{CHx} - n_A} + \frac{\rho_{CHx} - \rho_A}{n_{CHx} - n_A} . n_M \qquad (2)$$

En considérant la masse volumique de l'air comme négligeable devant celle du polymère massif ($\rho_A$ de l'ordre de $10^{-3}\rho_{CHx}$) et en donnant la valeur 1 à l'indice de réfraction de l'air, l'équation (2) devient :

$$\rho_M = \rho_{CHx} . \frac{n_M - 1}{n_{CHx} - 1} \qquad (3)$$

L'équation (3) permet de déterminer la masse volumique de la mousse de polymère par une simple mesure de son indice de réfraction effectif, à condition de connaître les valeurs de la masse volumique et de l'indice de réfraction du matériau massif à partir duquel est constituée la mousse, à savoir le polymère massif.

Des mesures localisées d'épaisseur, par microradiographie X, et de chemin optique associé, par OCT, permettent de déterminer l'indice de réfraction effectif de l'échantillon en mousse (ceci est également applicable au polymère massif) et donc de déterminer sa masse volumique locale.

On donne à présent un exemple d'estimation de la masse volumique locale d'un microballon en mousse.

On considère un microballon en mousse de polymère CHx dont la synthèse a permis de viser les paramètres suivants :

- un diamètre externe de 2 mm,
- une épaisseur de 100 $\mu$m, et
- une masse volumique de 250 mg/cm$^3$.

Ce microballon a été monté sur un ensemble qui permet les caractérisations RX et OCT en un même endroit de la mousse. Cet ensemble est schématiquement représenté sur la figure 6 et comprend un fil capillaire 48 et un support de capillaire 50 permettant une mesure par radiographie X. Le microballon 52 est fixé à une extrémité du fil capillaire 48 par un point de colle 54. L'autre extrémité du fil capillaire est fixée au support 50.

Dans un premier temps, une mesure de l'indice de réfraction du polymère CHx massif a été réalisée sur un échantillon de CHx formé par polymérisation sous ultraviolet. Cet échantillon a été usiné pour le rendre plus homogène suivant son épaisseur. L'échantillon de CHx massif se présente alors sous la forme d'une pastille de 11 mm de diamètre et d'environ 2 mm d'épaisseur.

Cette pastille de CHx massif a été caractérisée à l'aide d'un système à palpeur de contact (pointe de touche) et à l'aide de l'OCT pour obtenir respectivement l'épaisseur et le chemin optique associé. A partir de ces résultats, on peut estimer l'indice de réfraction de l'échantillon à une longueur d'onde de 1310 nm qui est la longueur d'onde de travail de l'OCT.

De ces mesures, il a été déduit que l'indice de réfraction du polymère CHx massif valait :

$$n_{CHx} = 1,511 \pm 0,001 \text{ à } 1310 \text{ nm}$$

Grâce à un méplat 56 présent sur le support 50 du fil capillaire, le microballon en mousse de CHx a été caractérisé en épaisseur par microradiographie X en deux zones précises 58 et 60 du microballon. Comme on le voit, ces deux zones sont diamétralement opposées et délimitent un diamètre qui est perpendiculaire au fil capillaire. On a procédé à une mesure, par OCT, du chemin optique correspondant à la traversée de ces deux mêmes zones 58 et 60.

Les différents résultats obtenus permettent de déterminer l'indice de réfraction effectif $n_M$ de la mousse de CHx à 1310 nm :

| | |
|---|---|
| épaisseur moyenne | 101,9 $\mu$m |
| chemin optique moyen | 113,9 $\mu$m |
| indice de réfraction $n_M$ | 1,117 |

Ainsi, on a la valeur de l'indice de réfraction du polymère massif et sa masse volumique et l'on connaît à présent l'indice de réfraction de l'échantillon en mousse :

$$\rho_{CHx} = 1188 \text{ kg/m}^3$$

$$n_{CHx} = 1,511 \text{ à } 1310 \text{ nm}$$

$$n_M = 1,117 \text{ à } 1310 \text{ nm}$$

En reportant ces données numériques dans l'équation (3), on peut calculer la masse volumique de la mousse de polymère CHx. Pour l'échantillon considéré, la masse volumique vaut :

$$\rho_{CHx} = 272 \text{ kg/m}^3 \text{ (ou mg/cm}^3)$$

Grâce à une pesée sur une microbalance, on obtient la masse $m_{\mu b}$ du microballon :

$$m_{\mu b} = 317 \text{ µg} \pm 1 \text{ µg}$$

Une mesure de diamètre externe $\phi_{ext}$ avec un objectif télécentrique par ombroscopie optique, associée à la mesure d'épaisseur par radiographie X, permet de calculer le volume $V_{\mu b}$ de la matière formant le microballon. On obtient :

$$\phi_{ext} = 2027 \text{ µm} \pm 1 \text{ µm et } Ep = 101,4 \text{ µm} \pm 0,9 \text{ µm}$$

Ces mesures donnent une valeur moyenne de la masse volumique de la mousse de polymère CHx :

$$\rho_{CHx}' = \frac{m_{\mu b}}{V_{\mu b}}$$

avec

$$V_{\mu b} = \frac{4\pi}{3} \cdot \left[ \left( \frac{\phi_{ext}}{2} \right)^3 - \left( \frac{\phi_{ext}}{2} - Ep \right)^3 \right]$$

La valeur numérique de la masse volumique globale du microballon (valeur à comparer à celle qui a été trouvée plus haut) est :

$$\rho_{CHx}' = 267 \text{ mg/cm}^3 \pm 6 \text{ mg/cm}^3$$

Une mesure de masse volumique locale en un point du microballon peut être différente de la mesure de masse volumique globale ; la mesure de masse volumique locale, déterminée à partir de l'indice de réfraction de la mousse, est néanmoins incluse dans la gamme d'incertitude de la masse volumique globale calculée.

La figure 7 est une vue schématique d'un dispositif de tomographie par cohérence optique pour la mesure de chemins optiques sans contact. La source de lumière utilisée pour éclairer l'objet à caractériser 62 est une diode super-luminescente qui émet dans l'infrarouge. Cette source, le bras de référence de l'interféromètre et l'électronique d'analyse sont intégrés dans un boîtier 64 ; seule sort du boîtier une fibre optique 66 constituant une partie du bras de mesure de l'interféromètre 64.

Cette fibre optique se termine par un collimateur qui est utilisé pour éclairer l'objet à analyser et collecter la lumière réfléchie. Sa nature permet d'adapter la distance de travail entre la sortie de la fibre et l'objet à caractériser, de quelques millimètres à plusieurs dizaines de centimètres.

Le signal interférométrique analysé est transmis jusqu'à un ordinateur 70 par l'intermédiaire d'une carte d'acquisition 72 prévue pour l'obtention des chemins optiques qui caractérisent l'objet étudié. L'ordinateur 70 est muni de moyens 74 d'affichage des résultats obtenus.

Le moyen 76 de caractérisation complémentaire (système de microradiographie X pour l'épaisseur ou système d'ombroscopie optique pour le diamètre externe) permet le calcul de l'indice de réfraction effectif de l'objet et de la masse volumique de ce dernier dans le cas où il s'agit d'un échantillon poreux. Les résultats obtenus par ce moyen de caractérisation complémentaire sont également exploités par l'ordinateur 70.

La tomographie par cohérence optique peut être employée pour la mesure sans contact et non destructive de chemins optiques de films polymères tels que ceux qui sont utilisés dans l'industrie du conditionnement. Sa combinaison avec une mesure d'épaisseur permet de déterminer l'indice de réfraction d'un échantillon ainsi que la masse volumique de cet échantillon dans le cas où il est fait d'un matériau poreux, en particulier d'un matériau poreux isolant thermique.

La technique OCT peut également servir à caractériser des revêtements déposés sur un autre matériau, en particulier lors de contrôles sur des chaînes de fabrication. En effet, cette technique permet de différencier les chemins optiques particuliers d'un échantillon multicouche.

On a utilisé la technique de tomographie par cohérence optique pour caractériser des ballons creux de 2 mm de diamètre, faits de polymères de différentes natures. Des mesures ont également été effectuées sur des ballons dont les épaisseurs variaient entre 10 $\mu$m et 180 $\mu$m. Ces résultats montrent le large domaine d'applications de la technique en termes de mesure d'indice de réfraction.

La technique peut également être appliquée à la mesure de l'épaisseur d'une couche d'un matériau translucide ou transparent, que l'on a déposée à l'intérieur d'un ballon fait d'un polymère. Ce peut être, par exemple, une couche d'isotopes de l'hydrogène que l'on a solidifiés à température cryogénique.

De plus, on a utilisé la technique de tomographie par cohérence optique sur des objets sphériques et creux en mousse de polymère, de 2 mm de diamètre externe et d'environ 100 $\mu$m d'épaisseur. Leur indice de réfraction effectif a pu être calculé. Grâce à une mesure de l'indice de réfraction du polymère massif, il a été possible de calculer la densité locale de la mousse de polymère.

**Revendications**

**1.** Procédé de mesure sans contact de la masse volumique d'un matériau poreux, ce procédé étant **caractérisé en ce que** :

- on détermine, par une technique de tomographie par cohérence optique, le chemin optique correspondant à la traversée d'un objet (20, 32, 44, 52, 62), fait du matériau poreux, par un faisceau lumineux utilisé pour la mise en oeuvre de la technique, le matériau poreux étant translucide ou transparent au faisceau lumineux,
- on détermine l'épaisseur de l'objet,
- on détermine l'indice de réfraction du matériau poreux, à la longueur d'onde centrale du faisceau lumineux, à partir du chemin optique et de l'épaisseur ainsi déterminés, et
- on détermine la masse volumique du matériau poreux à partir de l'indice de réfraction ainsi déterminé,

dans lequel l'objet (32, 52, 62) est sphérique et creux et a ainsi des diamètres interne et externe, on détermine le diamètre interne et le chemin optique par tomographie par cohérence optique, on détermine le diamètre externe par ombroscopie optique, et l'on détermine l'épaisseur de l'objet en calculant la moitié de la différence entre les diamètres externe et interne ainsi déterminés.

**2.** Procédé selon la revendication 1, dans lequel le matériau poreux est constitué d'un matériau massif contenant des alvéoles et l'on détermine la masse volumique $\rho_p$ du matériau poreux par la formule suivante :

$$\rho_p = \rho_m \frac{n_p - 1}{n_m - 1}$$

où $n_p$ représente l'indice de réfraction du matériau poreux et $\rho_m$ et $n_m$ représentent respectivement la masse volumique et l'indice de réfraction du matériau massif.

**3.** Procédé selon la revendication 2, dans lequel on détermine l'indice de réfraction du matériau massif par tomographie par cohérence optique et par une mesure d'épaisseur à partir d'un objet fait du matériau massif.

## Claims

1. A method for contactless measurement of the density of a porous material, this method being **characterized in that**:

   - one determines by an optical coherence tomography technique, the optical path corresponding to the crossing of an object (20, 32, 44, 52, 62), made of the porous material, by a light beam used for implementing the technique, the porous material being translucent or transparent to the light beam,
   - the thickness of the object is determined,
   - the refractive index of the porous material, is determined at the central wavelength of the light beam, from the thereby determined optical path and thickness, and
   - the density of the porous material is determined from the thereby determined refractive index,

   wherein the object (32, 52, 62) is spherical and hollow and thereby has outer and inner diameters, the inner diameter and the optical path are determined by optical coherence tomography, the outer diameter is determined by backlit shadowgraphy, and the thickness of the object is determined by calculating half the difference between the thereby determined outer and inner diameters.

2. The method according to claim 1, wherein the porous material consists of a bulk material containing cells and the density $\rho_p$ of the porous material is determined by the following formula:

$$\rho_p = \rho_m \frac{n_p - 1}{n_m - 1}$$

   wherein $n_p$ represents the refractive index of the porous material and $\rho_m$ and $n_m$ respectively represent the density and the refractive index of the bulk material.

3. The method according to claim 2, wherein the refractive index of the bulk material is determined by optical coherence tomography and by a thickness measurement from an object made from the bulk material.


## Patentansprüche

1. Verfahren zur kontaktlosen Messung der Dichte eines porösen Materials, **gekennzeichnet durch**:

   - Bestimmen des optischen Weges **durch** eine kohärenzoptische Tomographietechnik, der der Durchquerung des Objektes (20, 32, 44, 52, 62) aus porösem Material, **durch** ein Lichtbündel, welches zur Ausführung der Technik benutzt wird, entspricht, wobei das poröse Material durchsichtig oder transparent gegenüber dem Lichtstrahl ist,
   - Bestimmen der Dicke des Objekts
   - Bestimmen des Refraktionsindex des porösen Materials entlang der Länge des zentralen Strahls des Lichtbündels, ausgehend vom optischen Weg und der so bestimmmten Dicke und
   - Bestimmen der Dichte des porösen Materials ausgehend vom so bestimmten Refraktionsindex, wobei

   das Objekt (32, 52, 62) kugelförmig und hohl ist und damit innere und äußerte Durchmesser hat, ein Bestimmen des inneren Durchmessers und des optischen Weges mittels kohärenzoptischer Topographie erfolgt, ein Bestimmen des äußeren Durchmessers mittels Schattenwurf erfolgt, und ein Bestimmen der Dicke des Objekts **durch** Berechnung der Hälfte der Differenz zwischen den so bestimmten äußeren und inneren Durchmessern erfolgt.

2. Verfahren nach Anspruch 1, wobei das poröse Material aus einem massiven Material besteht, welches Poren enthält, wobei das Bestimmen der Dichte $\rho_p$ des porösen Materials mittels folgender Formel erfolgt:

$$\rho_p = \rho_m \frac{n_p - 1}{n_m - 1}$$

   wobei $n_p$ dem Refraktionsindex des porösen Materials entspricht und $\rho_m$ und $n_m$ jeweils der Dichte sowie dem Refraktionsindex des massiven Materials entsprechen.

3.  Verfahren nach Anspruch 2, wobei das Bestimmen des Refraktionsindex des massiven Materials durch koheränzoptische Tomographie und durch das Bestimmen der Dicke, ausgehend von einem Objekt aus dem massiven Material, erfolg

FIG. 1A

FIG. 1B

FIG. 2

FIG. 3

FIG. 4A

FIG. 4B

FIG. 5

FIG. 6

FIG. 7

## RÉFÉRENCES CITÉES DANS LA DESCRIPTION

**Documents brevets cités dans la description**

- WO 2006030149 A
- WO 2004083772 A
- WO 2008023024 A

**Littérature non-brevet citée dans la description**

- **ALMEIDA.** Sol-gel silica films on silicon substrates. *INTERNATIONAL JOURNAL OF OPTOELEC-TRONICS,* 1994, vol. 9 (2), 135-142
- **SORIN et al.** Simultaneous Thickness and Group Index Measurement Using Optical Low-Coherence Reflectometry. *IEEE PHOTONICS TECHNOLOGY LETTERS,* Janvier 1992, vol. 4 (1), 105-107
- **CHOUX et al.** Spatial reconstruction algorithm of DT layer in cryogenic targets using optical techniques. *FUSION SCIENCE AND TECHNOLOGY,* Mai 2007, vol. 51 (4), 727-736